Europäisches Patentamt

European Patent Office

Office européen des brevets

(19)

(11) Numéro de publication : **0 163 564**
**B1**

(12) **FASCICULE DE BREVET EUROPÉEN**

(45) Date de publication du fascicule du brevet :
27.07.88

(51) Int. Cl.⁴ : **G 21 C 1/02, F 22 B 1/06**

(21) Numéro de dépôt : **85400878.6**

(22) Date de dépôt : **06.05.85**

(54) **Reacteur nucléaire à neutrons rapides à générateur de vapeur intégré dans la cuve.**

(30) Priorité : **11.05.84 FR 8407332**

(43) Date de publication de la demande :
**04.12.85 Bulletin 85/49**

(45) Mention de la délivrance du brevet :
**27.07.88 Bulletin 88/30**

(84) Etats contractants désignés :
**BE DE GB IT NL**

(56) Documents cités :
**DE-A- 2 400 882**
**FR-A- 2 015 805**
**FR-A- 2 055 476**
**FR-A- 2 228 194**

(73) Titulaire : **COMMISSARIAT A L'ENERGIE ATOMIQUE**
**31/33, rue de la Fédération**
**F-75015 Paris (FR)**

(72) Inventeur : **Tilliette, Zéphyr**
**71, Avenue J.B. Clément**
**F-92140 Clamart (FR)**

(74) Mandataire : **Mongrédien, André et al**
**c/o BREVATOME 25, rue de Ponthieu**
**F-75008 Paris (FR)**

Jouve, 18, rue St-Denis, 75001 Paris, France

**Description**

La présente invention se rapporte à un réacteur nucléaire à neutrons rapides du type comprenant un circuit primaire intégré dans une cuve remplie de métal liquide et contenant le cœur du réacteur ainsi que des pompes primaires pour faire circuler ce métal liquide, et des moyens pour transférer la chaleur véhiculée par le métal liquide à l'eau circulant dans un circuit eau/vapeur comportant des moyens pour transformer cette chaleur en électricité.

Dans les réacteurs existants de ce type, tels que les réacteurs français Phénix et Super-Phénix, la chaleur véhiculée par le métal liquide du circuit primaire (généralement du sodium) est transférée à l'eau du circuit eau/vapeur par un circuit intermédiaire, dit circuit secondaire. Un métal liquide (généralement du sodium) circulant dans le circuit secondaire prélève la chaleur véhiculée par le métal liquide primaire dans des échangeurs de chaleur intégrés à la cuve du réacteur, pour la transférer à l'eau du circuit eau/vapeur par des générateurs de vapeur externes à la cuve.

Dans ces réacteurs, la présence du circuit secondaire de métal liquide s'explique par le désir d'éviter tout risque de venue en contact du sodium du circuit primaire avec l'eau du circuit eau/vapeur à l'intérieur même de la cuve du réacteur. En effet, on sait que la venue en contact du sodium avec de l'eau produit une réaction violente. Dans un réacteur nucléaire à neutrons rapides, un tel contact risque de se produire au niveau des générateurs de vapeur. Afin d'éviter que l'onde de choc résultant d'une éventuelle réaction sodium-eau ne se répercute jusqu'au cœur du réacteur, on a donc pris pour principe de placer les générateurs de vapeur en dehors de la cuve du réacteur.

Parallèlement, les réacteurs existants tels que les réacteurs français Phénix et Super-Phénix sont des réacteurs de type intégré dans lesquels l'ensemble du circuit primaire se trouve confiné à l'intérieur de la cuve du réacteur. Cette option a été choisie pour tenir compte du fait qu'il est toujours préférable de confiner un circuit primaire radioactif à la fois pour des raisons de radioprotection et de sûreté.

Compte tenu de ces deux impératifs opposés, les réacteurs à neutrons rapides intégrés existants comprennent donc un circuit intermédiaire de métal liquide. Cela a évidemment pour conséquence d'en accroître le coût de façon importante.

Pour cette raison, on a déjà envisagé de supprimer le circuit intermédiaire de métal liquide en faisant sortir le circuit primaire de la cuve du réacteur. Toutefois, cette solution n'est pas totalement satisfaisante, en raison de la forte radioactivité des produits de fission entraînés par le métal liquide primaire.

L'invention a précisément pour objet un réacteur nucléaire à neutrons rapides préservant l'intégration du circuit primaire à l'intérieur de la cuve du réacteur tout en permettant la suppression du circuit intermédiaire traditionnel de métal liquide grâce à l'utilisation de générateurs de vapeur d'un type nouveau pouvant être placés à l'intérieur de la cuve du réacteur sans qu'une réaction sodium/eau puisse se produire à ce niveau.

A cet effet, il est proposé conformément à l'invention un réacteur nucléaire à neutrons rapides du type comprenant un circuit primaire intégré dans une cuve remplie de métal liquide et contenant le cœur du réacteur ainsi que des moyens pour faire circuler ce métal liquide et des moyens pour transférer la chaleur véhiculée par le métal liquide à l'eau circulant dans un circuit eau/vapeur, caractérisé en ce que lesdits moyens de transfert de chaleur comprennent au moins un générateur de vapeur logé dans la cuve du réacteur et comportant au moins un faisceau de tubes internes dans lesquels circule l'eau du circuit eau/vapeur, au moins un faisceau de tubes externes baignant dans le métal liquide primaire, les tubes externes entourant chacun des tubes internes pour définir avec ceux-ci un espace annulaire sous pression de gaz neutre, relié à un circuit secondaire de faible puissance thermique comprenant des moyens pour faire circuler ce gaz neutre sous pression tel que de l'hélium dans ledit espace annulaire et assurer l'échange thermique.

Grâce à ces caractéristiques, on intègre en réalité à l'intérieur de la cuve du réacteur des échangeurs métal liquide-gaz neutre plutôt que des générateurs de vapeur au sens habituel du terme. Les exigences de sûreté sont ainsi préservées et le coût d'investissement d'un tel réacteur est réduit de façon substantielle.

Selon un mode de réalisation préféré de l'invention, la cuve du réacteur est obturée par une dalle de fermeture horizontale que traverse de façon étanche le générateur de vapeur, ce dernier comportant au-dessus de la dalle une plaque à tubes supérieure supportant le faisceau de tubes internes, ouverts à leur extrémité inférieure, une plaque à tubes intermédiaire surmontée par une chambre de sortie de vapeur du circuit eau/vapeur et supportant un faisceau de tubes intermédiaires entourant les tubes internes, fermés à leurs extrémités inférieures et dans le fond desquels débouchent les tubes internes, et une plaque à tubes inférieure surmontée par une chambre de sortie de gaz neutre et supportant le faisceau de tubes externes entourant les tubes intermédiaires, le générateur de vapeur comprenant de plus des tubes de gaz neutre reliant le fond des tubes externes à des orifices d'entrée de gaz neutre situés entre la plaque à tubes inférieure et la dalle de fermeture.

Dans une telle structure, il est à noter que tous les tubes sont suspendus indépendamment les uns des autres aux plaques à tubes correspondantes et libres de se dilater vers le bas. La fiabilité mécanique des tubes et du générateur de vapeur dans son ensemble s'en trouve améliorée.

De même, bien que les extrémités inférieures des tubes externes soient reliées à des tubes de gaz neutre, la dilatation de ces tubes externes est également rendue possible par le fait que chacun des tubes de gaz neutre comporte de préférence une partie sensiblement horizontale de longueur suffisante et de diamètre réduit donc à grande capacité de compensation de dilatation, située à la partie inférieure de l'appareil.

Conformément à l'invention, il faut également noter que l'enveloppe habituelle des générateurs de vapeur disparaît pour être remplacée par une virole de confinement du métal liquide de faible épaisseur. Cette virole, de conception très simple, est placée en-dessous de la plaque à tubes inférieure et encercle les faisceaux de tubes internes, intermédiaires et externes imbriqués. Elle présente un orifice d'entrée du métal liquide situé au-dessus du niveau normal du métal liquide dans la cuve du réacteur et elle est ouverte à son extrémité inférieure pour permettre la sortie du métal liquide. Une hauteur d'échange satisfaisante peut ainsi être obtenue sans accroître la hauteur de la cuve du réacteur.

En outre, l'intégration de générateurs de vapeur comportant un écoulement intermédiaire de gaz neutre à l'intérieur de la cuve du réacteur permet de supprimer les échangeurs de refroidissement du réacteur à l'arrêt qui sont utilisés habituellement dans les réacteurs intégrés. En effet, cette fonction de refroidissement du réacteur lors de l'arrêt des pompes primaires peut être remplie par la partie échangeur métal liquide-gaz neutre de chacun des générateurs de vapeur.

Afin qu'une circulation du métal liquide par convection naturelle puisse alors s'établir à l'intérieur de la virole en cas d'arrêt des pompes primaires, la virole présente de plus, en-dessous du niveau normal de métal liquide dans la cuve du réacteur, des fenêtres d'entrée soit normalement obturées, des moyens commandant l'ouverture automatique de ces fenêtres lors de l'arrêt des pompes primaires, soit calibrées de telle sorte qu'en régime nominal, elles ne laissent passer qu'un débit réduit de sodium primaire.

De préférence, le générateur de vapeur comporte une partie démontable comprenant la plaque à tubes supérieure, le faisceau de tubes internes, la plaque à tubes intermédiaire, la chambre de sortie de vapeur et le faisceau de tubes intermédiaires. Cette disposition facilite la fabrication en usine, le transport, le montage sur le site et surtout l'inspection en service, les vérifications ou réparations ultérieures des tubes externes verticaux qui constituent les tubes principaux des générateurs de vapeur.

Afin d'améliorer le rendement thermique des générateurs de vapeur, chacun des tubes internes comporte de préférence deux parois coaxiales définissant entre elles une zone annulaire fermée à l'une de ses extrémités et remplie d'un fluide formant écran thermique.

Selon une première variante de réalisation de l'invention, la plaque à tubes supérieure est surmontée par une chambre d'entrée d'eau du circuit eau/vapeur. La zone annulaire formée entre les parois de chacun des tubes internes est alors fermée à son extrémité supérieure, ouverte à son extrémité inférieure et remplie d'eau/vapeur stagnante donc à faible échange thermique.

Selon une deuxième variante de réalisation de l'invention, la plaque à tubes supérieure forme le fond supérieur du générateur de vapeur, les parois internes des tubes internes se prolongeant au-dessus de la plaque à tubes supérieure pour déboucher dans des orifices d'entrée d'eau du circuit eau/vapeur. La zone annulaire formée entre les parois de chacun des tubes internes est alors fermée à son extrémité inférieure, ouverte à son extrémité supérieure et remplie d'un gaz stagnant tel que de l'air surplombant la dalle du réacteur.

Afin de réduire la vitesse de l'eau dans le bas de chaque tube interne avant qu'elle ne remonte dans l'espace intermédiaire correspondant, l'extrémité inférieure de la paroi interne de chacun des tubes internes est située au-dessus de l'extrémité inférieure de la paroi externe de chacun de ces tubes.

Le circuit eau/vapeur comprenant de façon habituelle une turbine à vapeur, le circuit secondaire comprend de préférence un resurchauffeur assurant un transfert de la chaleur véhiculée par le gaz neutre de ce circuit vers la vapeur à resurchauffer avant que celle-ci ne soit admise dans la partie correspondante de la turbine.

En variante, on peut envisager un circuit secondaire de gaz neutre confiné à l'intérieur du bâtiment réacteur. Dans ce cas la quantité de chaleur emportée hors du générateur de vapeur principal peut être utilisée par exemple, pour un complément de production de vapeur vive et pour un complément de rechauffage de l'eau d'alimentation.

On décrira maintenant, à titre d'exemple non limitatif, un mode de réalisation préféré de l'invention en se référant aux dessins annexés dans lesquels :

— la figure 1 est une vue en coupe transversale représentant de façon schématique un réacteur nucléaire à neutrons rapides comportant des générateurs de vapeur intégrés à la cuve conformément à l'invention,

— la figure 2 est une vue en plan, en coupe selon la ligne II-II de la figure 1,

— la figure 3 est une vue en coupe longitudinale schématique d'un générateur de vapeur du réacteur représenté sur les figures 1 et 2, montrant à une échelle volontairement agrandie pour en faciliter la lecture l'une des cellules tubulaires élémentaires du générateur,

— la figure 4 est une vue comparable à la figure 3 représentant le générateur de vapeur après enlèvement de la partie eau/vapeur démontable de celui-ci,

— la figure 5 est une vue comparable à la figure 3 illustrant une variante de réalisation du générateur de vapeur pouvant être utilisé dans le réacteur selon l'invention,

— la figure 6 est une vue en coupe transversale du générateur de vapeur selon la ligne VI-VI de la figure 3, et

— la figure 7 est une vue schématique représentant le circuit de gaz neutre et le circuit eau/vapeur du réacteur selon l'invention,

— la figure 8 est une vue schématique comparable à la figure 7, représentant une variante dans laquelle le circuit de gaz neutre est disposé à l'intérieur du bâtiment réacteur.

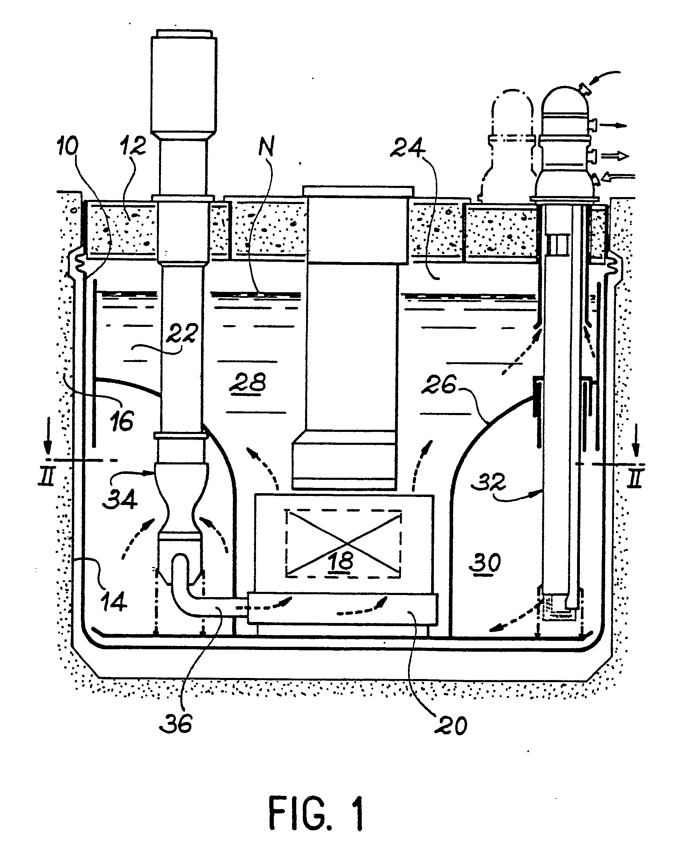

On a représenté schématiquement sur la figure 1 le circuit primaire intégré d'un réacteur nucléaire à neutrons rapides réalisé conformément à l'invention.

De façon en soi connue pour un réacteur nucléaire à neutrons rapides de type intégré, on voit sur la figure 1 que l'ensemble du circuit primaire du réacteur selon l'invention est placé à l'intérieur d'une cuve cylindrique 10, d'axe vertical, dite cuve principale, obturée à son extrémité supérieure par une dalle de fermeture 12 remplie de béton. La cuve principale 10 et sa dalle de fermeture 12 sont placées dans un puits de cuve 14 formé dans une enceinte de béton 16. De façon connue, le supportage de la cuve 10 peut se faire soit en posant celle-ci sur le fond du puits de cuve 14, soit en suspendant la cuve à la partie supérieure du puits de cuve, comme l'illustre la figure 1.

Le coeur 18 du réacteur est placé à l'intérieur de la cuve 10, dans la partie centrale de celle-ci et repose sur le fond de la cuve 10 par l'intermédiaire d'une structure de supportage comportant un sommier 20 servant par ailleurs à l'alimentation du coeur en sodium liquide.

La cuve 10 est remplie jusqu'à un niveau N d'un certain volume de métal liquide 22, généralement constitué par du sodium. Le sodium 22 est surmonté par un ciel de gaz neutre 24 généralement constitué par de l'argon. Une cuve interne 26, par exemple à redan, définit à l'intérieur de la cuve principale 10 un collecteur chaud 28 situé au-dessus du coeur 18 et de la cuve 26 et un collecteur froid annulaire 30 entourant le coeur 18.

Conformément à l'invention, un certain nombre de générateurs vapeur 32 traversent la dalle de fermeture 12 et plongent dans la partie périphérique de la cuve principale 10, en traversant la cuve interne 26. Le sodium chaud sortant du coeur 18 du réacteur et admis dans le collecteur chaud 28 pénètre dans les générateurs de vapeur 32. En traversant ces derniers, il se refroidit par échange thermique avec l'eau du circuit eau/vapeur, avant de ressortir dans le collecteur froid 30. De façon connue, le réacteur comprend de plus un certain nombre de pompes primaires 34 placées à l'intérieur du collecteur froid 30. Ces pompes primaires 34 aspirent le sodium primaire relativement froid rejeté dans le collecteur 30 par les générateurs de vapeur 32, pour le refouler dans le sommier 20 d'alimentation du cœur 18 du réacteur par des conduites 36.

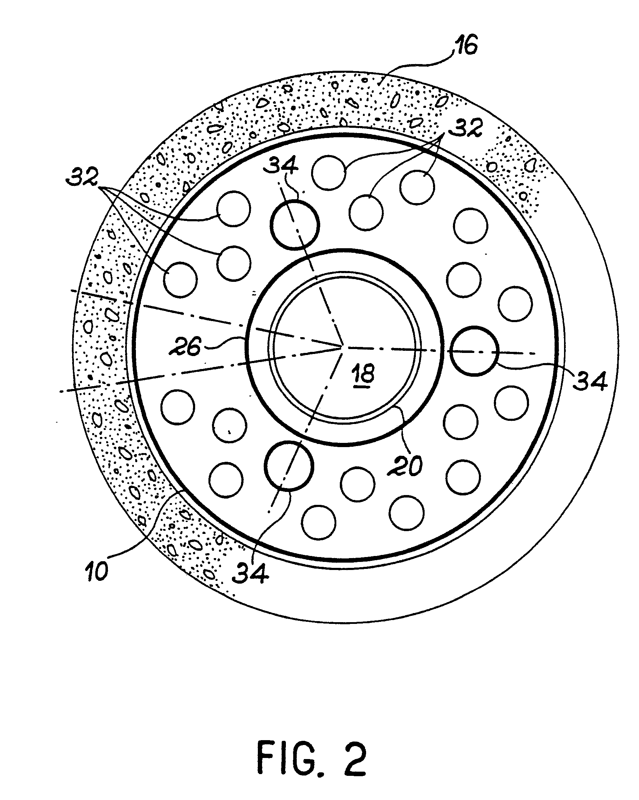

Comme l'illustre notamment la figure 2, le circuit primaire qui vient d'être décrit en se référant à la figure 1 peut comprendre trois pompes primaires 34, six générateurs de vapeur étant associés à chacune de ces pompes. Toutefois, cette réalisation n'est évidemment pas limitative et un nombre différent de pompes et de générateurs de vapeur peut être envisagé.

Comme dans les réacteurs intégrés existants, le supportage des composants situés à l'intérieur de la cuve du réacteur, c'est-à-dire ici le supportage des générateurs de vapeur 32 et des pompes 34, peut être réalisé soit par une suspension de ces composants à la dalle de fermeture 12, soit en faisant reposer ces composants sur le fond de la cuve 10, comme on l'a représenté schématiquement sur la figure 1.

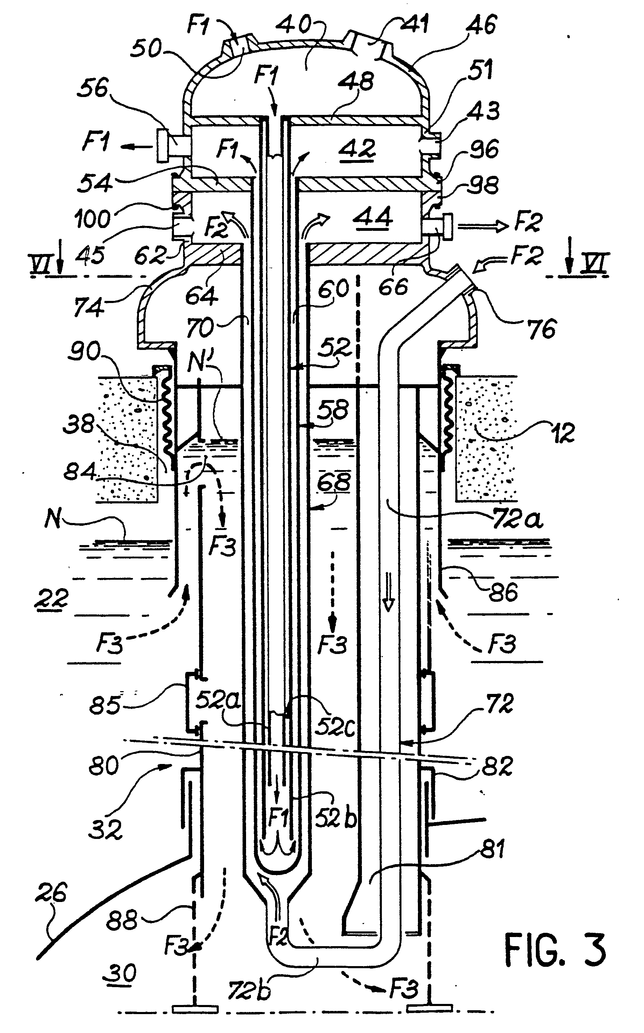

On décrira maintenant en se référant à la figure 3 un mode de réalisation préféré du générateur de vapeur 32.

Ainsi, on voit sur la figure 3 que le générateur de vapeur 32 présente une configuration généralement verticale et traverse un passage 38 formé dans la dalle 12, de telle sorte que la zone d'échange proprement dite plonge directement dans le sodium 22 contenu dans la cuve du réacteur, alors que le raccordement du générateur de vapeur au circuit eau/vapeur du réacteur et à un circuit secondaire de gaz neutre est réalisé par une partie du générateur située au-dessus de la dalle 12.

Cette partie du générateur de vapeur située au-dessus de la dalle 12, qui constitue la tête de ce composant, comprend en partant du haut une chambre d'entrée d'eau 40, une chambre de sortie de vapeur 42 et une chambre de sortie d'hélium 44 dans l'exemple considéré où l'hélium constitue le gaz chimiquement neutre qui assure le transfert de chaleur entre le sodium primaire et l'eau du circuit eau/vapeur. Ce gaz chimiquement neutre peut toutefois être un gaz différent et même un mélange de gaz.

La chambre d'entrée d'eau 40 est formée entre le dôme supérieur 46 du générateur de vapeur et une plaque à tubes horizontale supérieure 48. Le dôme 46 porte une tubulure d'entrée d'eau 50 servant à raccorder la chambre 40 au circuit eau/vapeur comme on le verra ultérieurement.

La plaque à tubes supérieure 48 supporte un faisceau de tubes droits verticaux 52, ouverts à leurs extrémités inférieures et s'étendant librement vers le bas à partir de la plaque 48 jusqu'à l'intérieur de la cuve du réacteur.

La chambre de sortie de vapeur 42 est formée quant à elle à l'intérieur d'une paroi cylindrique 51 prolongeant vers le bas le dôme 46, entre la plaque à tubes supérieure 48 et une plaque à tubes horizontale intermédiaire 54. Une tubulure de sortie de vapeur 56 est prévue dans la paroi 51 pour permettre le raccordement de la chambre de sortie de vapeur 42 avec le circuit eau/vapeur.

La plaque à tubes intermédiaire 54 supporte un faisceau de tubes droits verticaux 58 dits tubes intermédiaires, qui sont disposés de façon coaxiale autour de chacun des tubes internes 52, de façon à définir avec ces derniers des passages annulaires 60.

Comme le montre la figure 3, les tubes intermédiaires 58 sont fermés à leurs extrémités inférieures, à proximité de laquelle débouchent les tubes internes 52. Une circulation de l'eau, puis de la vapeur s'établit ainsi depuis la chambre d'entrée d'eau 40 jusqu'à la chambre de sortie de vapeur 42. Ainsi, l'eau admise dans la chambre 40 descend à l'intérieur des tubes internes 52, avant de remonter par les espaces annulaires 60 jusqu'à la chambre de sortie de vapeur 42, comme l'illustrent les flèches $F_1$ sur la figure 3.

La chambre de sortie d'hélium 44 est également formée à l'intérieur d'une paroi cylindrique 62 disposée dans le prolongement de la paroi 51, et elle est délimitée entre la plaque à tubes intermédiaire 54 et une plaque à tubes inférieure horizontale 64. Une tubulure de sortie 66 formée dans la paroi 62 permet de raccorder la chambre de sortie d'hélium 44 au circuit d'hélium qui sera décrit ultérieurement.

La plaque à tubes inférieure 64 supporte un troisième faisceau de tubes droits verticaux 68 disposé coaxialement autour de chacun des tubes intermédiaires 58, de façon à définir avec ces derniers une deuxième série d'espaces annulaires 70.

Comme le montre la figure 3, les tubes externes 68 se prolongent vers le bas légèrement au-delà du fond des tubes intermédiaires 58, de façon à être raccordés à des tubes d'arrivée d'hélium 72 de diamètre réduit servant à introduire l'hélium par le bas de chacun des tubes 68, de telle sorte que ce gaz neutre remonte par les espaces annulaires 70 jusque dans la chambre de sortie d'hélium 44.

Bien qu'on puisse envisager en théorie d'introduire l'hélium par des tubes 72 traversant de préférence le fond de la cuve du réacteur, la solution la plus réaliste représentée sur la figure 3 consiste à faire remonter les tubes 72, en dehors du faisceau d'échange proprement dit, jusqu'au dessus de la dalle 12 pour assurer l'indépendance du générateur par rapport à la cuve principale.

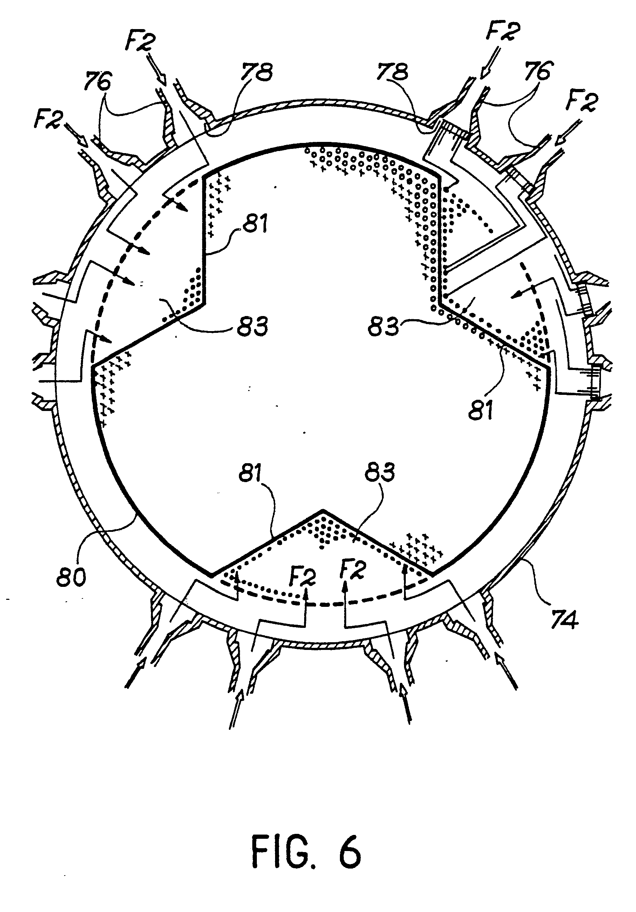

En pratique, on voit sur la figure 3 que le générateur de vapeur comporte à cet effet une zone élargie délimitée par une paroi évasée 74 qui s'étend vers le bas depuis la plaque à tubes inférieure 64 jusqu'à proximité de la face supérieure de la dalle de fermeture 12. Un certain nombre de tubulures d'entrée d'hélium 76 (douze dans le mode de réalisation représenté sur la figure 6) sont implantées sur cette paroi 74 et supportent des petites plaques à tubes 78 sur chacune desquelles sont raccordés un certain nombre de tubes 72. Ces tubes 72 sont ensuite regroupés pour descendre le long du faisceau d'échange par une partie droite verticale 72a. Cette partie droite 72a se prolonge jusqu'en dessous de l'extrémité inférieure des tubes externes 68. Elle est raccordée à l'extrémité inférieure des tubes externes 68 par une partie sensiblement horizontale 72b, située en dessous de l'extrémité inférieure des tubes 68. Cette partie 72b autorise une certaine dilatation différentielle entre les tubes externes 68 et les tubes d'arrivée d'hélium 72. La circulation de l'hélium dans le générateur de vapeur est représentée schématiquement par des flèches $F_2$ sur la figure 3.

Les structures d'échange des générateurs de vapeur 32 utilisés dans le réacteur selon l'invention sont donc constituées par un faisceau de cellules tubulaires élémentaires verticales plongeant dans le sodium liquide 22 contenu dans la cuve 10 du réacteur. Dans cette structure, les tubes 52, 58 et 68 constituant chaque cellule tubulaire sont indépendants les uns des autres, notamment sur le plan des dilatations différentielles entre tubes et entre le faisceau et son enveloppe extérieure. Cette caractéristique est fondamentale pour la fiabilité mécanique des tubes et des générateurs de vapeur dans leur ensemble. Associée à l'utilisation d'un fluide intermédiaire chimiquement neutre tel que l'hélium en circulation entre le sodium et l'eau/vapeur et à une température intermédiaire entre celle de ces deux fluides, elle permet d'obtenir des générateurs de vapeur à intégrité mécanique et à fiabilité élevées.

De plus, cette structure dite à tubes plongeurs permet d'obtenir un rendement thermique acceptable pour une hauteur d'échange autorisant l'implantation des générateurs de vapeur à l'intérieur de la cuve du réacteur. Ainsi, pour un réacteur de 1 500 MWe à générateurs de vapeur intégrés dans une cuve principale de diamètre intérieur inférieur ou égal à 25 m et de hauteur inférieure ou égale à 18,5 m, on dispose pour chaque générateur d'une hauteur d'échange de chaleur comprise entre 15 et 17 m et d'un diamètre extérieur du faisceau d'environ 1,75 m. Les longueurs de tubes seraient réduites si les tubes internes 58 comportaient des ailettes placées dans les espaces annulaires 60 par lesquels remonte la vapeur d'eau.

Afin de permettre une bonne compréhension de la structure du générateur de vapeur utilisé dans le réacteur selon l'invention et notamment afin que les circulations des différents fluides dans les tubes apparaissent clairement, on a représenté sur la figure 3 une seule cellule tubulaire élémentaire, en accroissant considérablement le diamètre des tubes constituant cette cellule par rapport aux dimensions du générateur de vapeur. En pratique, il existe bien entendu un très grand nombre de cellules élémentaires du type de celle qui est représentée sur la figure 3. Ces différentes cellules définissent la zone d'échange proprement dite du générateur de vapeur.

Afin de canaliser l'écoulement du sodium 22 autour des différentes cellules tubulaires du générateur de vapeur, celui-ci comprend de plus une virole 80 encerclant le faisceau de cellules tubulaires, cette virole pouvant par exemple être raccordée à la partie évasée 74 de la tête du générateur de vapeur. Cette virole 80 traverse de façon étanche la cuve interne 26 du réacteur, par exemple par l'intermédiaire d'un système d'étanchéité à cloche d'argon 82.

L'entrée du sodium contenu dans le collecteur chaud 28 à l'intérieur de la virole 80 s'effectue par des orifices d'entrée 84 formés dans celle-ci. De préférence, ces orifices d'entrée 84 sont situés au-dessus du niveau N du sodium 22 dans la cuve du réacteur, de telle sorte que le niveau de sodium N' à l'intérieur du générateur de vapeur soit supérieur à ce niveau N. On peut ainsi accroître notablement la longueur d'échange thermique entre le sodium et l'eau du circuit eau/vapeur, ce qui permet, comme on l'a mentionné précédemment, de limiter à une valeur raisonnable la hauteur de la cuve du réacteur. L'utilisation de tubes vapeur-hélium à ailettes devrait permettre de maintenir le niveau d'entrée du sodium dans le générateur de vapeur immédiatement en-dessous de la dalle principale en vue d'assurer une meilleure protection thermique de cette dernière. La circulation du sodium depuis le collecteur chaud 28 jusqu'aux orifices d'entrée 84 s'effectue à l'intérieur d'une collerette 86 plongeant dans le sodium 22 et entourant la virole 80 jusqu'au-dessus des orifices d'entrée 84.

En partie basse du générateur de vapeur, la sortie du sodium dans le collecteur froid 30 s'effectue directement par l'extrémité inférieure ouverte de la virole 80. La circulation du sodium dans le générateur de vapeur est représentée schématiquement par des flèches $F_3$ sur la figure 3.

En outre, la circulation de l'hélium dans l'espace intermédiaire 70 peut permettre d'évacuer la chaleur résiduelle dissipée dans le cœur du réacteur, en cas d'arrêt des pompes primaires 34 (figure 1). Les échangeurs de refroidissement du réacteur à l'arrêt qui sont utilisés habituellement peuvent ainsi être supprimés. Afin qu'une circulation du sodium 22 puisse s'établir par convection naturelle à l'intérieur de la virole 80, on prévoit alors sur cette dernière, en-dessous du niveau N du sodium une fenêtre d'entrée 85 normalement fermée. L'ouverture de cette fenêtre est commandée automatiquement lors de l'arrêt des pompes 34. En variante, des fenêtres calibrées ne laissant passer qu'un débit réduit de sodium primaire en régime nominal, peuvent être proposées.

On a représenté schématiquement sur la figure 3 un premier mode de supportage possible du générateur de vapeur 32 dans lequel celui-ci repose directement sur le fond de la cuve 10 du réacteur. Ce supportage qui permet de ne pas surcharger la dalle de fermeture 12, s'effectue grâce à une virole ou à des pieds 88 fixés à l'extrémité inférieure de la virole 80 et reposant directement ou indirectement sur le fond de la cuve du réacteur. Pour tenir compte de la dilatation différentielle, l'étanchéité au niveau de la traversée de la dalle 12 par le générateur de vapeur est alors réalisée par exemple à l'aide d'un système à soufflet 90 dont les extrémités sont fixées respectivement à la dalle et à la collerette 86.

De préférence et comme l'illustre également la figure 3, la partie supérieure du générateur de vapeur portant les tubes internes 52 et intermédiaires 58 est démontable afin de rendre plus aisé un contrôle et une inspection des tubes externes 68 qui sont les seuls à être directement en contact avec le sodium primaire. A cet effet, la plaque à tubes intermédiaire 54 se prolonge vers l'extérieur au-delà de la paroi 52, pour former une bride 96 qui repose sur une bride 98 formée à l'extrémité supérieure de la paroi 62. Ces deux brides sont fixées l'une sur l'autre de façon étanche par des moyens de fixation de tout type connu et notamment par des boulons 100 traversant des trous régulièrement répartis sur la circonférence des brides 96 et 98.

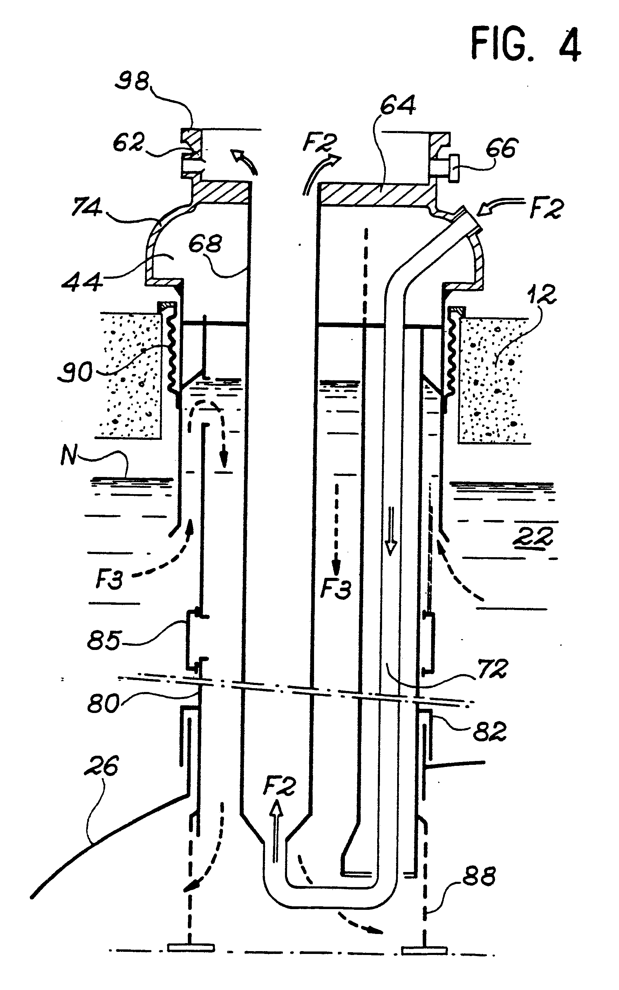

La figure 4 est une vue comparable à la figure 3 montrant l'allure de l'échangeur après enlèvement de la partie supérieure démontable comprenant les chambres d'entrée d'eau 40 et de sortie de vapeur 42, ainsi que les tubes internes 52 et intermédiaires 58 qui leur sont associés. On voit sur la figure 4 que l'accès aux tubes externes 68 est ainsi totalement libéré.

Cette possibilité de démontage du générateur de vapeur a par ailleurs pour avantages de faciliter la fabrication du générateur en usine, son transport, son montage sur le site ainsi que les vérifications ou réparations ultérieures.

Par ailleurs, une inspection de chacune des plaques à tubes est également rendue possible par des orifices d'accès 41, 43 et 45 formés respectivement dans le dôme 46 et dans les parois 51 et 62.

On a mentionné précédemment que l'eau du circuit eau/vapeur descend par les tubes internes 52 avant de remonter dans les espaces annulaires 60 définis autour de ces tubes. Il risque donc de se produire un échange de chaleur parasite entre l'eau relativement froide pénétrant par les tubes internes 52, et la vapeur remontant par les espaces 60.

Afin de réduire fortement cet échange de chaleur parasite, le tube interne 52 comporte deux parois coaxiales 52a et 52b définissant entre elles une zone annulaire 52c. Dans le mode de réalisation représenté sur la figure 3, cette zone annulaire est obturée à son extrémité supérieure, au niveau de la plaque à tubes 48 et ouverte à son extrémité inférieure. Elle est donc remplie d'eau et de vapeur stagnante, qui assurent une isolation thermique satisfaisante, surtout dans la partie supérieure du faisceau dans laquelle une telle isolation est particulièrement nécessaire.

Dans le mode de réalisation préféré représenté sur la figure 3, la paroi externe 52b du tube interne 52 se prolonge vers le bas au-delà de sa paroi interne 52a, ce qui permet à l'eau parvenant à l'extrémité inférieure des tubes de réduire sa vitesse. Cette réduction de vitesse est favorable au changement de direction de l'eau qui se produit dans le fond des tubes intermédiaires 58.

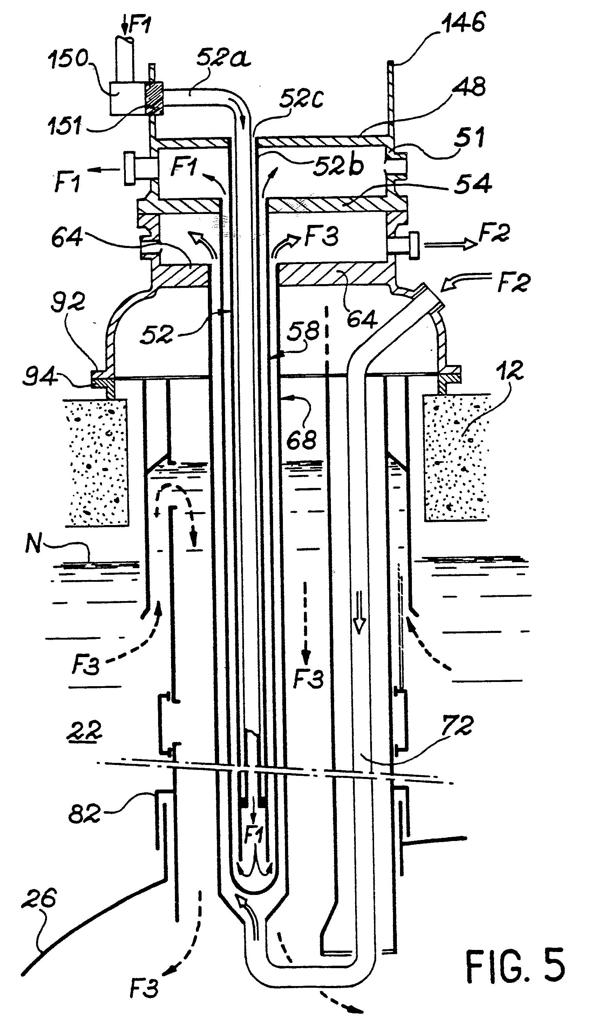

Dans une autre variante de réalisation de l'invention représentée sur la figure 5, les tubes internes 52 comprennent également une paroi interne 52a et une paroi externe 52b séparées par une zone annulaire 52c. Toutefois, cette zone annulaire est obturée dans ce cas au niveau de l'extrémité inférieure du tube interne 52a, qui se trouve également située au-dessus de l'extrémité inférieure du tube externe 52b. Au contraire, la zone 52c est ouverte vers le haut au niveau de la plaque à tubes 48.

Dans ce cas, le dôme 46 du générateur de vapeur est supprimé et remplacé par une virole cylindrique 146 prolongeant vers le haut la cloison 51 et s'ouvrant à son extrémité supérieure dans le bâtiment du réacteur. La zone 52c est donc remplie par un gaz à la pression atmosphérique et généralement par l'air qui règne au-dessus du générateur de vapeur. La virole 146 supporte des plaques à tubes 151 sur lesquelles sont raccordées les tubulures d'entrée 150. Les parois internes 52a des tubes internes 52 se prolongent au-dessus de la plaque à tubes supérieure 48, pour être raccordées aux plaques à tubes 151, un certain nombre de parois 52a étant fixées sur chacune des plaques.

Sur la figure 5, on a également représenté une deuxième variante de supportage du générateur de vapeur, dans laquelle celui-ci est suspendu à la dalle 12. Dans ce cas, la paroi évasée 74 comporte à son extrémité inférieure une bride 92 qui repose sur une bride 94 fixée à la dalle 12 autour de l'ouverture 38.

En pratique et bien que cela ne soit pas représenté sur les figures, il est souhaitable de prévoir un centrage des tubes internes 52 à l'intérieur des tubes intermédiaires 58, ainsi qu'un centrage de ces derniers à l'intérieur des tubes externes 68. Ce centrage peut être réalisé à l'aide de tout moyen approprié connu et notamment grâce à des dispositifs en hélice fixés à l'extérieur des tubes 52 et 58, au moins dans la partie basse de ceux-ci, autorisant l'écoulement vers le haut de la vapeur et de l'hélium, et améliorant l'échange thermique.

En ce qui concerne le dimensionnement des plaques à tubes 48, 54 et 64, les remarques suivantes peuvent être faites.

La plaque à tubes supérieure 48 est traversée par les tubes internes 52, de faible diamètre. Elle se trouve à une température modérée correspondant à la température de l'eau d'alimentation à l'entrée, soit environ 260 °C. Enfin, elle est soumise à une pression de service correspondant à la perte de charge du circuit eau/vapeur. L'épaisseur de cette plaque 48 est donc modérée.

La plaque à tubes intermédiaires 54 est traversée par les tubes intermédiaires 58 qui restent de dimension modeste par rapport au pas du réseau. Cette plaque est soumise à une pression de service moyenne correspondant à la différence de pression entre l'hélium et la vapeur, pour une température modérée de l'ordre de 450 °C correspondant à la température de sortie de la vapeur. Elle est donc légèrement plus épaisse que la plaque à tubes 48.

Enfin, la plaque à tubes inférieure 64 est la seule à être percée au diamètre des tubes externes 68. Elle est soumise à des conditions de température et de pression voisines de celles de la plaque à tubes intermédiaire 54 (pression différentielle d'environ 7 MPa et température de sortie d'hélium sensiblement inférieure à 500 °C). En effet, il faut noter que la température de l'hélium baisse d'une cinquantaine de degrés entre le niveau de sodium et la plaque à tubes 64 en raison de la poursuite sur près de trois mètres de l'échange de chaleur hélium/vapeur. Ce phénomène est très favorable au comportement de la plaque à tubes 64.

On a déjà mentionné que le générateur de vapeur 32 utilisé dans le réacteur selon l'invention présente une configuration généralement cylindrique d'axe vertical. En pratique on comprend toutefois à la lecture de la description qui précède, que se pose le problème de l'implantation des parties verticales 72a des tubes 72 d'arrivée d'hélium par rapport à l'ensemble des cellules tubulaires du générateur. Dans une configuration préférentielle bien que non limitative représentée sur la figure 6, cette implantation est réalisée en ménageant à l'intérieur de la virole 80, de configuration généralement cylindrique, trois zones 83 de passage des tubes 72 s'étendant sur toute la hauteur de la virole, à 120° les unes par rapport aux autres. Ces zones 83 de section sensiblement triangulaire, sont délimitées par la virole cylindrique 80 et par des cloisons verticales 81 présentant une section en forme de V. De façon plus précise, les branches des V formés en section par chacune des cloisons 81 sont parallèles avec les branches adjacentes des deux autres cloisons 81.

Le faisceau de cellules tubulaires présente ainsi en section la forme d'une étoile à trois branches. Il est à noter que cette répartition des tubes sur les plaques 48, 54 et 64 est favorable au dimensionnement.

De préférence, afin d'éviter un échange de chaleur parasite entre le sodium chaud rentrant à la partie supérieure de la virole 80 et le sodium refroidi sortant à l'extrémité inférieure de celle-ci, les zones 83 dans lesquelles sont logés les tubes 72 d'arrivée d'hélium sont maintenues en atmosphère correspondant à celles du ciel de gaz neutre 24 du réacteur. Ce résultat est obtenu en obturant l'extrémité inférieure de chacune des zones 83 par une paroi traversée de façon étanche par les tubes 72. De plus, ces zones 83 peuvent être isolées thermiquement par rapport à l'intérieur de la virole 80 grâce à des systèmes de calorifugeage appropriés (non représentés). Une autre solution consiste à laisser le sodium s'écouler à vitesse réduite dans ces zones en réchauffant l'hélium descendant. Ces zones ne se différencient guère des autres zones situées dans la cuve de sodium.

Le générateur de vapeur intégré à la cuve de réacteur conformément à l'invention présente dont une structure telle que tous les fluides descendant dans la cuve principale sont contenus dans des structures tubulaires simples prises séparément, ces structures étant modérément sollicitées dans des conditions bien connues et fortement divisées, ce qui réduit de façon considérable les risques liés à des fissures et à des fuites éventuelles. De plus, une détection de fuite peut être réalisée aisément, par exemple en contrôlant l'atmosphère de gaz neutre qui se trouve dans le générateur de vapeur, au-dessus du niveau N' de sodium, et dans laquelle devrait aboutir l'hélium en provenance des fuites ou dans le ciel de gaz neutre du réacteur.

Par ailleurs, en plus de ses fonctions de transfert de chaleur et de milieu intermédiaire entre le sodium et l'eau vapeur, l'hélium joue le rôle d'amortisseur thermique entre ces deux fluides, ce qui est un point important pour les réacteurs à neutrons rapides.

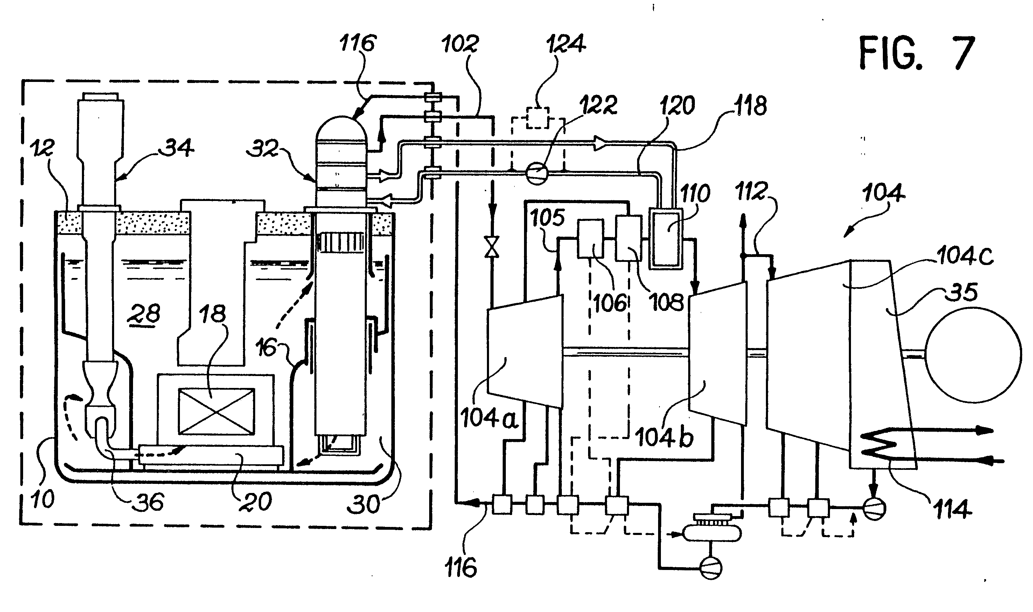

Sur la figure 7, on a représenté de façon schématique et à titre d'exemple non limitatif l'ensemble des circuits eau/vapeur et hélium de réacteur selon l'invention.

Le circuit eau/vapeur comprend une conduite 102 de vapeur par laquelle la tubulure de sortie de vapeur 56 de chacun des générateurs de vapeur 32 communique avec l'étage haute pression 104a d'une turbine à vapeur 104 comportant par ailleurs un étage moyenne pression 104b et un étage basse pression 104c. La vapeur sortant de l'étage haute pression 104a par une tuyauterie 105 traverse un sécheur 106, un resurchauffeur moyenne pression 108 par soutirage vapeur et un resurchauffeur 110 par hélium, avant d'être dirigée vers l'étage moyenne pression 104b de la turbine. Enfin, la vapeur est dirigée vers l'étage basse pression 104c par une conduite 112, avant d'être condensée dans un condenseur 35.

L'eau de condensation retourne aux tubulures d'entrée 50 des générateurs de vapeur 32 par une canalisation 116.

Conformément à une caractéristique intéressante de l'invention, le resurchauffeur 110 que traverse la vapeur admise dans l'étage moyenne pression 104b de la turbine assure simultanément le refroidissement de l'hélium circulant dans le circuit intermédiaire des générateurs de vapeur 32. A cet effet, on voit sur la figure 7 que le circuit d'hélium se compose d'une canalisation 118 qui relie les tubulures de sortie d'hélium 66 des générateurs de vapeur à l'entrée du resurchauffeur 110 et d'une canalisation retour 120 qui relie la sortie du resurchauffeur 110 aux tubulures d'entrée d'hélium 76 des générateurs de vapeur. La circulation de l'hélium est commandée par une soufflante 122 placée dans la canalisation retour 120. Un système de traitement 124 et notamment de séchage de l'hélium est monté en parallèle sur la soufflante 122.

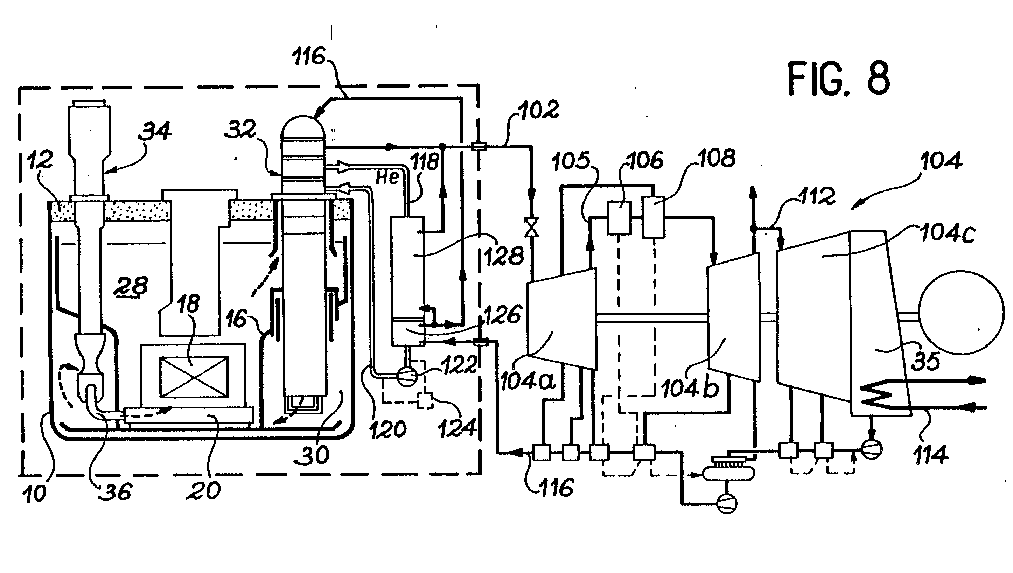

Conformément à une variante de la disposition précédente, une autre utilisation de la chaleur transportée par l'hélium est proposée. Elle est représentée sur la figure 8 ou l'on remarque un circuit de gaz neutre intégré dans le bâtiment réacteur et servant à un réchauffage complémentaire de l'eau d'alimentation et à une production complémentaire de vapeur vive. Ce circuit comprend un réchauffeur d'eau 126 et un générateur de vapeur complémentaire 128.

L'utilisation d'hélium dans le circuit intermédiaire des générateurs de vapeur est particulièrement intéressante. En effet, ce gaz est chimiquement neutre et ne réagit ni avec le sodium ni avec l'eau. De plus, il n'exige pas l'emploi d'aciers différents de ceux couramment utilisés aux températures de fonctionnement élevées d'un générateur de vapeur. Enfin, il possède de bonnes caractéristiques thermiques et thermodynamiques. En particulier, sa conductibilité thermique est sensiblement plus élevée que celle de l'air ou du gaz carbonique, sa chaleur spécifique est plus de quatre fois supérieure à celle du sodium liquide, mais sa masse spécifique est de 120 à 150 fois plus faible. L'hélium est utilisable à échelle industrielle et son écoulement sollicite peu les structures. De plus, dans le cas particulier selon l'invention, dans lequel le générateur de vapeur est intégré dans la cuve du réacteur, il présente l'avantage de ne pas absorber les neutrons.

**Revendications**

1. Réacteur nucléaire à neutrons rapides comprenant un circuit primaire intégré dans une cuve (10) remplie de métal liquide (22) et contenant le cœur (18) du réacteur ainsi que des moyens (34) pour faire circuler ce métal liquide et des moyens (32) pour transférer la chaleur véhiculée par le métal liquide à l'eau circulant dans un circuit eau/vapeur (102 à 116), caractérisé en ce que lesdits moyens de transfert de chaleur comprennent au moins un générateur de vapeur (32) logé dans la cuve (10) du réacteur et comportant au moins un faisceau de tubes internes (52) dans lesquels circule l'eau du circuit eau/vapeur, au moins un faisceau de tubes externes (68) baignant dans le métal liquide primaire (22), les tubes externes entourant chacun des tubes internes pour définir avec ceux-ci un espace annulaire (70) sous pression de gaz neutre relié à un circuit secondaire de faible puissance (118, 120) comprenant des moyens (122) pour faire circuler ce gaz neutre sous pression dans ledit espace annulaire et assurer l'échange thermique.

2. Réacteur selon la revendication 1, caractérisé en ce que la cuve (10) du réacteur est obturée par une dalle de fermeture horizontale (12) que traverse de façon étanche le générateur de vapeur (32), ce dernier comportant au-dessus de la dalle une plaque à tube supérieure (48) supportant le faisceau de tubes internes (52) ouverts à leur extrémité inférieure, une plaque à tubes intermédiaires (54) surmontée par une chambre de sortie de vapeur (42) du circuit eau/vapeur et supportant un faisceau de tubes intermédiaires (58) entourant les tubes internes (52), fermés à leurs extrémités inférieures et dans le fond desquels débouchent les tubes internes, et une plaque à tubes inférieure (64) surmontée par une chambre de sortie de gaz neutre (44) et supportant le faisceau de tubes externes (68) entourant les tubes intermédiaires, le générateur de vapeur comprenant de plus des tubes de gaz neutre (72) reliant le fond des tubes externes (68) à des orifices d'entrée de gaz neutre (76) situés entre la plaque à tubes inférieure (64) et la dalle de fermeture (12), lesdits tubes de gaz neutre (72) comportant en-dessous du fond des tubes externes (68) une partie sensiblement horizontale (72b) servant à compenser les dilatations différentielles.

3. Réacteur selon la revendication 2, caractérisé en ce que le générateur de vapeur (32) comporte, en-dessous de la plaque à tubes inférieure (64), une virole de confinement (80) du métal liquide (22) encerclant les faisceaux de tubes internes, intermédiaires et externes imbriqués, cette virole présentant un orifice d'entrée (84) du métal liquide situé au-dessus du niveau normal (N) du métal liquide dans la cuve (10) du réacteur et étant ouverte à son extrémité inférieure pour permettre la sortie du métal liquide.

4. Réacteur selon la revendication 3, caractérisé en ce que la virole (80) présente de plus, en-dessous du niveau normal (N) de métal liquide dans la cuve (10) du réacteur, une fenêtre d'entrée (85) normalement obturée, des moyens commandant l'ouverture de cette fenêtre à l'arrêt des moyens (34) de circulation du métal liquide (22), afin de permettre la circulation du métal liquide à l'intérieur de la virole par convection naturelle et son refroidissement par échange de chaleur avec le gaz neutre circulant dans ledit espace annulaire (70).

5. Réacteur selon la revendication 3, caractérisé en ce que la virole (80) présente, en-dessous du niveau normal (N) de métal liquide dans la cuve (10) du réacteur, des orifices calibrés afin de permettre la circulation du métal liquide à l'intérieur de la virole par convection naturelle et son refroidissement par échange de chaleur avec le gaz neutre circulant dans ledit espace annulaire (70), à l'arrêt des moyens (34) de circulation du métal liquide.

6. Réacteur selon l'une quelconque des revendications 2 à 5, caractérisé en ce que ladite virole (80) présente la forme générale d'un cylindre de révolution, d'axe vertical et délimite avec une paroi interne (81) au moins une zone (83) s'étendant sur toute sa hauteur et dans laquelle descendent des parties verticales (72a) des tubes de gaz neutre (72).

7. Réacteur selon l'une quelconque des revendications 2 à 6, caractérisé en ce que le générateur de vapeur comporte une partie démontable comprenant la plaque à tubes supérieure (48), le faisceau de tubes internes (52), la plaque à tubes intermédiaire (54), la chambre de sortie de vapeur (42) et le faisceau de tubes intermédiaires (58).

8. Réacteur selon l'une quelconque des revendications 2 à 7, caractérisé en ce que chacun des tubes internes (52) comporte deux parois coaxiales (52a, 52b) définissant entre elles une zone annulaire (52c) fermée à l'une de ses extrémités et remplie d'un fluide statique formant écran thermique.

9. Réacteur selon l'une quelconque des revendications 2 à 8, caractérisé en ce que la plaque à tubes supérieure (48) est surmontée par une chambre d'entrée d'eau (40) du circuit eau/vapeur.

10. Réacteur selon la revendication 9, prise en combinaison avec la revendication 8, caractérisé en ce que ladite zone annulaire (52c) est fermée à son extrémité supérieure, ouverte à son extrémité inférieure et remplie d'eau/vapeur stagnante.

11. Réacteur selon la revendication 9, caractérisé en ce que la plaque à tubes supérieure (48) forme le fond supérieur du générateur de vapeur (32), les parois internes (52a) des tubes internes (52) se prolongeant au-dessus de la plaque à tubes supérieure pour déboucher dans des orifices d'entrée d'eau (150) du circuit eau/vapeur (Fig. 5).

12. Réacteur selon la revendication 11, caractérisé en ce que ladite zone annulaire (52c) est fermée à son extrémité inférieure, ouverte à son extrémité supérieure et remplie d'un gaz stagnant surplombant la dalle (12) du réacteur.

13. Réacteur selon l'une quelconque des revendications 8, 10, 11 et 12, caractérisé en ce que l'extrémité inférieure de la paroi interne (52a) de chacun des tubes internes (52) est située au-dessus de l'extrémité inférieure de la paroi externe (52b) de chacun de ces tubes (Fig. 3).

14. Réacteur selon l'une quelconque des revendications précédentes, caractérisé en ce que le circuit eau/vapeur comprenant une turbine à vapeur (104), le circuit secondaire de gaz neutre (118, 120) comprend un resurchauffeur (110) assurant un transfert de chaleur depuis le gaz neutre circulant dans ce circuit vers la vapeur du circuit eau/vapeur, avant que celle-ci ne soit réadmise dans la turbine (Fig. 7).

15. Réacteur selon l'une quelconque des revendications 1 à 13, caractérisé en ce que le circuit intermédiaire (118, 120) de gaz neutre est intégré dans le bâtiment réacteur et comprend un réchauffeur d'eau (126) et un générateur de vapeur complémentaire (128) utilisant la chaleur de ce gaz neutre (Fig. 8).

**Claims**

1. Fast neutron nuclear reactor of the type comprising a primary circuit integrated into a liquid metal-filled vessel (22) and containing the reactor core (18), as well as means (34) for circulating the said liquid metal and means (32) for transferring the heat carried by the liquid metal to the water circulating in a water/steam circuit (102 to 116), characterized in that the heat transfer means comprise at least one steam generator (32) located in the reactor vessel (10) and having at least one group of inner tubes (52) in which circulates the water of the water/steam circuit, at least one group of outer tubes (68) immersed in the primary liquid metal (22), the outer tube surrounding each of the inner tubes in order to define therewith an annular space (70) under a neutral gas pressure, connected to a low power secondary circuit (118, 120) having means (122) for circulating this pressurized neutral gas, such as helium in said annular space and ensure the heat exchange.

2. Reactor according to claim 1, characterized in that the reactor vessel (10) is sealed by a horizontal sealing slab (12) tightly passing through the steam generator (32), whereby the latter is provided above said slab with an upper tube plate (48) supporting the group of inner tubes (52) and open at their lower end, an intermediate tube plate (54) surmounted by a steam discharge chamber (42) of the water/steam circuit and supporting a group of intermediate tubes (58) surrounding the inner tubes (52), closed at their lower ends and into the base of which issue the inner tubes, and a lower tube plate (64) surmounted by a neutral gas discharge chamber (44) and supporting the group of outer tubes (68) surrounding the intermediate tubes, the steam generator also having neutral gas tubes (72) connecting the bottom of the outer tubes (68) to neutral gas inlet ports (76) located between the lower tube plate (64) and the sealing slab (12), said neutral gas tubes (72) being provided below the bottom of the outer tubes (68) with a substantially horizontal portion (72b) serving to compensate differential expansions.

3. Reactor according to claim 2, characterized in that the steam generator (32) has, below the lower tube plate (64), a liquid metal (22) confinement ferrule (80) encircling the groups of fitted inner, intermediate and outer tubes, said ferrule having an intake (84) for the liquid metal located above the normal level (N) of the liquid metal in the reactor vessel (10) and is open at its lower end to permit the outflow of liquid metal.

4. Reactor according to claim 3, characterized in that the ferrule (80) also has, below the normal level (N) of the liquid metal in the reactor vessel (10), a normally closed entry window (85), means controlling the opening of said window when the liquid metal (22) circulating means (34) are stopped, so as to permit the circulation of the liquid metal within the ferrule by natural convection and its cooling by heat exchange with the neutral gas circulating in the annular space (70).

5. Reactor according to claim 3, characterized in that the ferrule (80) has, below the normal level (N) of the liquid metal in the reactor vessel (10), calibrated openings in order to permit the circulation of the liquid metal within the ferrule by natural convection and its cooling by heat exchange with the neutral gas circulating in the said annular space (70), when the liquid metal circulating means (34) are stopped.

6. Reactor according to any one of the claims 2 to 5, characterized in that the ferrule (80) is generally shaped like a vertically axed cylinder of revolution and defines with the inner wall (81) at least one zone (83) extending over its entire height and into which descends the vertical parts (72a) of the neutral gas tubes (72).

7. Reactor according to any one of the claims 2 to 6, characterized in that the steam generator has a dismantable part comprising the upper tube plate (48), the inner tube plate (52), the intermediate tube plate (54), the steam discharge chamber (42) and the group of intermediate tubes (58).

8. Reactor according to any one of the claims 2 to 7, characterized in that each of the inner tubes (52) has two coaxial walls (52a, 52b) defining between them an annular zone (52c) closed at one of its ends and filled with a static fluid forming a heat shield.

9. Reactor according to any one of the claims 2 to 8, characterized in that the upper tube plate (48) is surmounted by a water intake chamber (40) of the water/steam circuit.

10. Reactor according to claim 9, characterized in that the annular zone (52c) is closed at its upper end, open at its lower end and filled with stagnant steam/water.

11. Reactor according to claim 9, characterized in that the upper tube plate (48) forms the upper base of the steam generator (32), the inner walls (52a) of the inner tubes (52) extending above the upper tube plate to issue into water inlets (150) of the steam/water circuit (Fig. 5).

12. Reactor according to claim 11, characterized in that the annular zone (52c) is closed at its lower end, open at its upper end and filled with a stagnant gas above the reactor slab (12).

13. Reactor according to any one of the claims 8, 10, 11 and 12, characterized in that the lower end of the inner wall (52a) of each of the inner tubes (52) is positioned above the lower end of the outer wall (52b) of each of these tubes (Fig. 3).

14. Reactor according to any one of the preceding claims, characterized in that the water/steam circuit incorporates a steam turbine (104), the secondary neutral gas circuit (118, 120) comprises a resuperheater (110) ensuring a heat transfer from the neutral gas circulating in said circuit to the steam of the water/steam circuit, before the latter is readmitted into the turbine (Fig. 7).

15. Reactor according to any one of the claims 1 to 13, characterized in that the intermediate neutral gas circuit (118, 120) is integrated into the reactor building and comprises a water reheater (126) and a supplementary steam generator (128) using the heat of this neutral gas (Fig. 8).


**Patentansprüche**

1. Schneller Neutronenkernreaktor mit einem Kreislauf, der in einem Behälter (10) integriert ist, welcher mit Flüssigmetall (22) gefüllt ist und den Reaktorkern (18) sowie Mittel (34), um dieses Flüssigmetall umlaufen zu lassen, und Mittel (32) aufweist, um die von dem Flüssigmetall transportierte Wärme an Wasser zu überführen, welches in einem Wasser-Dampf-Kreislauf (102 bis 116) umläuft, dadurch gekennzeichnet, daß die genannten Mittel zur Wärmeüberführung wenigstens einen Dampferzeuger (32), der in dem Behälter (10) des Reaktors angeordnet ist und wenigstens ein Bündel von inneren Rohren (52) aufweisen, in denen das Wasser des Wasser-Dampf-Kreislaufes umläuft, wenigstens ein Bündel von äußeren Rohren (68) in das primäre Flüssigmetall (22) eingetaucht ist, die äußeren Rohre jeweils die inneren Rohre umgeben, um mit diesen einen sich unter dem Druck eines neutralen Gases befindenden Ringraum (70) zu begrenzen, der mit einem Sekundärkreis geringer Leistung (118, 120) verbunden ist, welcher Mittel (122) aufweist, um dieses sich unter Druck befindende neutrale Gas in dem genannten Ringraum umlaufen zu lassen und den Wärmeaustausch sicherzustellen.

2. Reaktor nach Anspruch 1, dadurch gekennzeichnet, daß der Behälter (10) des Reaktors mit einer horizontalen Abschlußplatte (12) verschlossen ist, die in dichter Weise den Dampfgenerator (32) durchquert, wobei dieser Letztere oberhalb der Platte eine obere Rohrplatte (48), die das Bündel von inneren Rohren (52) trägt, die an ihrem unteren Ende offen sind, eine Zwischenrohrplatte (54), die von einer Dampfauslaßkammer (42) des Wasser-Dampf-Kreislaufes überdeckt ist und ein Bündel von die inneren Rohre (52) umgebenden Zwischenrohren (58) hält, die an ihren unteren Enden geschlossen sind und in deren Boden die inneren Rohre münden, und eine untere Rohrplatte (64) umfaßt, die von einer Auslaßkammer für das neutrale Gas (44) überdeckt ist und das Bündel von äußeren Rohren (68) hält, die die Zwischenrohre umgeben, der Dampfgenerator ferner Rohre (72) für das neutrale Gas aufweist, die den Boden der äußeren Rohre (68) mit Einlaßöffnungen (76) für das neutrale Gas verbinden, welche sich zwischen der unteren Rohrplatte (64) und der Abschlußplatte (12) befinden, wobei die genannten Rohre (72) für das neutrale Gas unterhalb des Bodens der äußeren Rohre (68) einen im wesentlichen horizontalen Abschnitt (72b) aufweisen, der zum Ausgleich der unterschiedlichen Wärmedehnung dient.

3. Reaktor nach Anspruch 2, dadurch gekennzeichnet, daß der Dampfgenerator (32) unterhalb der unteren Rohrplatte (64) einen Mantel (80) zur Begrenzung des Flüssigmetalls (22) aufweist, der die verschachtelten Bündel mit den inneren Rohren, den Zwischenrohren und den äußeren Rohren umgibt, wobei dieser Mantel eine Einlaßöffnung (84) für das Flüssigmetall aufweist, die sich oberhalb des normalen Flüssigmetallspiegels (N) in dem Behälter (10) des Reaktors befindet, und an seinem unteren Ende offen ist, um den Austritt des Flüssigmetalls zu ermöglichen.

4. Reaktor nach Anspruch 3, dadurch gekennzeichnet, daß der Mantel (80) ferner unterhalb des normalen Flüssigmetallspiegels (N) in dem Behälter (10) des Reaktors ein normalerweise verschlossenes Einlaßfenster (85) aufweist, Mittel das öffnen dieses Fensters beim Anhalten der Umlaufmittel (34) für das Flüssigmetall (22) steuern, um das Umlaufen des Flüssigmetalls im Inneren des Mantels durch natürliche Konvektion und seine Kühlung durch Wärmetausch mit dem neutralen Gas zu erlauben, welches in dem genannten Ringraum (70) umläuft.

5. Reaktor nach Anspruch 3, dadurch gekennzeichnet, daß der Mantel (80) unterhalb des normalen Flüssigmetallspiegels (N) in dem Behälter (10) des Reaktors geeichte öffnungen aufweist, um das Umlaufen des Flüssigmetalls im Inneren des Mantels durch natürliche Konvektion und seine Kühlung durch Wärmeaustausch mit dem neutralen Gas, welches in dem genannten Ringraum (70) umläuft, beim Anhalten der Umlaufmittel (34) für das Flüssigmetall zu ermöglichen.

6. Reaktor nach irgendeinem der Ansprüche 2 bis 5, dadurch gekennzeichnet, daß der genannte Mantel (80) die allgemeine Form eines Drehzylinders mit vertikaler Achse aufweist und mit einer inneren Wand (81) wenigstens einen Bereich (83) begrenzt, der sich über seine gesamte Höhe erstreckt und in dem die vertikalen Abschnitte (72a) der Rohre für das neutrale Gas (72) absteigen.

7. Reaktor nach irgendeinem der Ansprüche 2 bis 6, dadurch gekennzeichnet, daß der Dampferzeuger einen ausbaubaren Abschnitt aufweist, der die obere Rohrplatte (48), das Bündel mit inneren Rohren (52), die Zwischenrohrplatte (54), die Dampfauslaßkammer (42) und das Bündel mit Zwischenrohren (58) umfaßt.

8. Reaktor nach irgendeinem der Ansprüche 2 bis 7, dadurch gekennzeichnet, daß jedes innere Rohr (52) zwei koaxiale Wände (52a, 52b) aufweist, die zwischen sich einen Ringraum (52c) begrenzen, der an einem seiner Enden geschlossen und mit einem statischen Fluid gefüllt ist, welches ein Wärmeschild bildet.

9. Reaktor nach irgendeinem der Ansprüche 2 bis 8, dadurch gekennzeichnet, daß die obere Rohrplatte (48) von einer Wassereinlaßkammer (40) für den Wasser-Dampf-Kreislauf überdeckt ist.

10. Reaktor nach Anspruch 9 in Kombination mit dem Anspruch 8, dadurch gekennzeichnet, daß der genannte Ringraum (52c) an seinem oberen Ende geschlossen, an seinem unteren Ende offen und mit stagnierendem Wasser/Dampf gefüllt ist.

11. Reaktor nach Anspruch 9, dadurch gekennzeichnet, daß die obere Rohrplatte (48) den oberen Boden des Dampferzeugers (32) bildet, die inneren Wände (52a) der inneren Rohre (52) oberhalb der oberen Rohrplatte verlängert sind, um in Wassereinlaßöffnungen (150) des Wasser-Dampf-Kreislaufs zu münden (Fig. 5).

12. Reaktor nach Anspruch 11, dadurch gekennzeichnet, daß der genannte Ringraum (52c) an seinem unteren Ende geschlossen, an seinem oberen Ende offen und mit einem stagnierenden Gas gefüllt ist, welches über der Platte (12) des Reaktors steht.

13. Reaktor nach irgendeinem der Ansprüche 8, 10, 11 oder 12, dadurch gekennzeichnet, daß sich das untere Ende der inneren Wand (52a) von jedem inneren Rohr (52) oberhalb des unteren Endes der äußeren Wand (52b) von jedem dieser Rohre befindet (Fig. 3).

14. Reaktor nach irgendeinem der vorhergehenden Ansprüche, dadurch gekennzeichnet, daß der Wasser-Dampf-Kreislauf eine Dampfturbine (104) aufweist, der Sekundärkreislauf für das neutrale Gas (118, 120) einen Zwischenüberhitzer (110) umfaßt, der eine Wärmeüberführung von dem neutralen, in diesem Kreislauf umlaufenden Gas zu dem Dampf des Wasser-Dampf-Kreislauf sicherstellt, bevor jener wieder der Turbine zugeführt wird (Fig. 7).

15. Reaktor nach irgendeinem der Ansprüche 1 bis 13, dadurch gekennzeichnet, daß der Zwischenkreislauf (118, 120) für das neutrale Gas in dem Reaktorgebäude integriert ist und einen Wasservorwärmer (126) und einen ergänzenden Dampferzeuger (128) aufweist, die die Wärme dieses neutralen Gases verwenden (Fig. 8).

FIG. 1

FIG. 2

FIG. 3

FIG. 4

FIG. 5

FIG. 6

FIG. 7

0 163 564

FIG. 8